(19)

Europäisches
Patentamt
European
Patent Office
Office européen
des brevets

(11) **EP 2 163 985 A1**

(12) **EUROPEAN PATENT APPLICATION**

(43) Date of publication:
**17.03.2010 Bulletin 2010/11**

(51) Int Cl.:
***G06F 9/44*** *(2006.01)*

(21) Application number: **09169159.2**

(22) Date of filing: **01.09.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **04.09.2008 US 204574**

(71) Applicant: **Honeywell International, Inc.
Morristown NJ 07962 (US)**

(72) Inventors:
• **Chen, Henry
Beijing 100044 (CN)**

• **Li, Cheng Jun
Beijing 100000 (CN)**
• **Plocher, Tom
Hugo, MN 55038 (US)**
• **Bedros, Saad J.
West St. Paul, MN 55118 (US)**

(74) Representative: **Buckley, Guy Julian
Patent Outsourcing Limited
1 King Street
Bakewell
Derbyshire DE45 1DZ (GB)**

(54) **Methods and systems of a user interface**

(57) One embodiment of the application provides a method including segmenting a 3D polygon mesh into a plurality of widgets, defining a state variable for each widget, defining a behavior for each widget, and assembling a three-dimensional user interface from the widgets, the state variables, and the behaviors.

FIG. 1

**Description**

BACKGROUND

The physical environment in which people live or work is equipped with various appliances including heating, ventilating, and air conditioning (HVAC) units with controllers and lights with light switches and sensors. With the development of computer technology, these appliances may be connected via a network to a control center where an administrator can monitor and control the appliances. Appliances located in different rooms within an intelligent building may be controlled with a three-dimensional (3D) based interaction application such as a 3D user interface (UI). 3D UIs are used in various environments because of their immersion and immediacy of visualization. Compared with two-dimensional (2D) UIs, 3D UIs provide more immersive effects and intuitive interactions.

BRIEF DESCRIPTION OF THE DRAWINGS

Some embodiments are illustrated by way of examples, and not by way of limitations, in the figures of the accompanying drawings in which:
Figure 1 is a block diagram of a system for generating a 3D UI according to an example embodiment;
Figure 2 is a flow diagram of a method according to an example embodiment;
Figures 3A-3D are block diagrams of widgets according to an example embodiment;
Figure 4 is a flow diagram of a method according to an example embodiment;
Figure 5 is a flow diagram of a method according to an example embodiment;
Figure 6 is a diagram of a 3D UI image according to an example embodiment;
Figure 7 is a flow diagram of a method according to an example embodiment; and
Figure 8 is a block diagram of an example computer system for executing methods according to an example embodiment.

DETAILED DESCRIPTION

It is a challenging task to efficiently generate and use a 3D UI, and to effectively associate the behavior or animation of a 3D UI with a user's interactions. The inventors have discovered that the challenge noted above, as well as others, can be addressed by converting a 3D polygon mesh of a physical object into an interactive 3D UI so as to facilitate the development of a 3D-based interaction application. A 3D polygon mesh is a 3D geometric model of a physical object that may be drawn by a graphics designer or generated by scanning the physical object. Such a 3D polygon mesh may represent an appliance in a physical environment such as an HVAC controller. The 3D polygon mesh may be segmented into interactive entities, also called widgets. The 3D UI permits a user to monitor and interact with one or more appliances in the physical environment via the 3D UI shown by a display device.
In the following description, for purposes of explanation, numerous specific details are set forth in order to provide a thorough understanding of example embodiments. It will be evident, however, to one skilled in the art that the embodiments of the application may be practiced without these specific details.

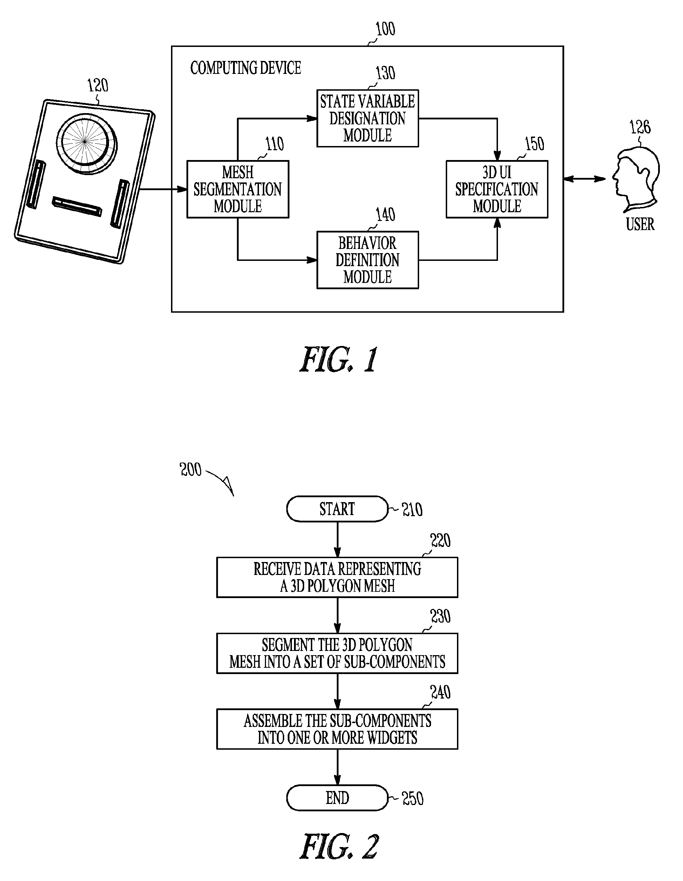

Figure 1 is a block diagram of a system 100 for generating a 3D UI according to an example embodiment. The system 100 may be a computing device such as a processor or a microcontroller. The system 100 includes a mesh segmentation module 110 that is coupled to receive data representing a 3D polygon mesh 120 that is a static polygon mesh. The mesh segmentation module 110 segments the 3D polygon mesh 120 into a number of widgets, which can be transformed through rotation or translation or a combination of them or through any other type of transformation so that a user 126 can interact with the 3D polygon mesh 120. The system 100 includes a state variable designation module 130 to define a state variable for each widget. Each state variable has a type and a legal value range so that the user 126 can update, retrieve, and maintain the state of a widget. The system 100 includes a behavior definition module 140 that defines a behavior for each widget. The behavior may be translation or rotation or another type of transformation, and has corresponding parameters that may include constraints. For example, the behavior may be moving along a specific line segment or rotating within some angle. The behavior defines how the user 126 may interact with each widget.
The system 100 includes a 3D UI specification module 150 that binds the state variable with the behavior in a relationship for each widget. The 3D UI specification module 150 assembles a specification for the 3D UI. The 3D UI specification encapsulates and stores the information about the widgets for the entire 3D polygon mesh, including the related state variables and behaviors, and the binding relationship between each state variable and its associated behavior. The 3D UI specification can be saved as a file and loaded into memory so that it can be reused in future. When the user 126 interacts with a widget, its state variable will be changed so as to cause a change in an appliance in a physical environment. If the state variable of the widget is updated, its appearance will be changed by applying the behavior to the widget. The system 100 may be a processor or a microcontroller or an application specific integrated circuit (ASIC).

Figure 2 is a flow diagram of a method 200 according to an example embodiment. The method 200 shows the activities of the mesh segmentation module 110. In block 210, the method 200 starts. In block 220, the mesh segmentation module 110 receives data representing the 3D polygon mesh 120. A static polygon mesh *M* is defined as a tuple {*V,E, F*} of vertices $V = \{p_i \mid p_i \in R^3, 1 \le i \le m\}$, *edges* $E = \{(pi,p_j) \mid p_i, p_j \in V\}$, and faces *F* , which are usually triangles $F = \{(p_i, p_j, p_k) \mid p_i, p_j, p_k \in V\}$. The faces *F* can also include other types of planar polygons, such as a quadrangle, a pentagon, or a hexagon. In block 230, the 3D polygon mesh 120 is segmented into a set of sub-components. In particular, if *S* is a set of mesh elements that is either *V*, *E* or *F*, segmenting the 3D polygon mesh 120 means to partition *S* into *k* disjoint connected sets:

$$\bigcup_{i=1}^{k} S_i = S, \ S_i \subset S, \ S_i \bigcap S_j = \varnothing, i, j = 1...k, i \ne j$$

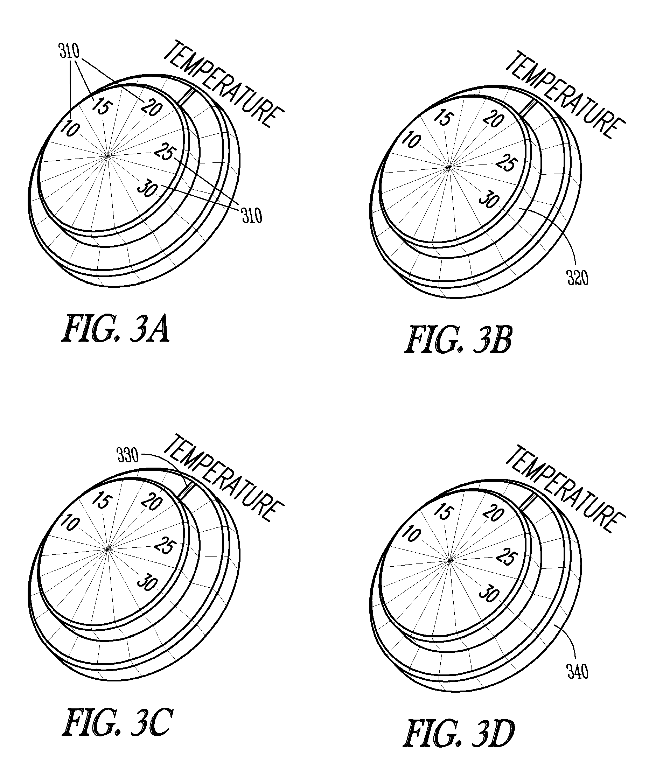

The 3D polygon mesh 120 may be segmented according to one of many segmentation algorithms such as, for example, a watershed-based mesh segmentation algorithm. The 3D polygon mesh 120 represents a rotatable temperature controller for a HVAC system (not shown). The mesh segmentation module 110 segments the 3D polygon mesh 120 into four sub-components, and Figures 3A, 3B, 3C and 3D are block diagrams of the sub-components according to an example embodiment. Numbers 310 representing temperature are included in a sub-component shown in Figure 3A. A top cylinder 320 is a sub-component shown in Figure 3B. A temperature indicator 330 is a sub-component shown in Figure 3C, and a bottom cylinder 340 is a sub-component shown in Figure 3D.

In block 240, the sub-components are assembled into one or more widgets. With reference to Figures 3A-3D, two kinds of widget can be assembled to represent the rotatable temperature controller. The numbers 310 representing temperature and the top cylinder 320 are assembled as a widget with functionality to facilitate rotation of the top cylinder 320 by a user to adjust a temperature. The temperature indicator 330 and the bottom cylinder 340 are assembled as another, alternative widget with functionality to facilitate rotation of the bottom cylinder 340 by a user to adjust the temperature. In block 250, the method 200 ends.

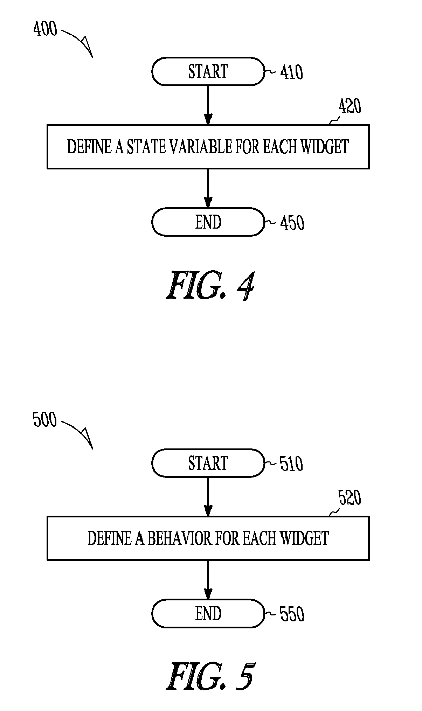

Figure 4 is a flow diagram of a method 400 according to an example embodiment. The method 400 shows the activity of the state variable designation module 130. In block 410, the method 400 starts. In block 420, the state variable designation module 130 defines a state variable *e* for each widget:

$$e = \{< t, r > \mid t \in T, r \in R\}$$

The state variable e has a particular type $t \in T$ and a legal value range $r \in R$. Some examples of the type T include integer, boolean, and enumeration (*T* = {int, bool, enum, ...}). $R = \{< k, R > \mid k \in K\}$ is a set of possible legal value ranges, represented as a string list, where *K* is a set of strings. Different types of the state variable e parse the legal value range in different ways as shown in Table 1. If the type is "Int" and the legal range is [10, 30], the state variable *e* is an integer that is less than 30 and more than 10. If the type is "Bool" and the legal value range is [ON, OFF], the state variable e is "ON" when true and "OFF" when false. If the type is "Enum" and the legal value range is [Fast, Medium, Slow], the state variable e can be "Fast," "Medium," or "Slow".

Table 1

| Type | Range | Meaning |
|------|-------|---------|
| Int | [10,30] | $10 \le e \le 30$ , e is a integer |
| Bool | [ON, OFF] | *e* = true means ON, e = false means OFF |
| Enum | [Fast, Medium, Slow] | *e* can be Fast, Medium, or Slow |

In block 450, the method 400 ends.

Figure 5 is a flow diagram of a method 500 according to an example embodiment. The method 500 shows the activity of the behavior definition module 140. In block 510, the method 500 starts. In block 520, the behavior definition module 140 defines a behavior *b* for each widget:

$$b = \{< a, l > \mid a \in A, l \in L\}$$

3

The behavior *b* has a particular type $a \in A$ and a parameter list $l \in L$. The type $A$ is rotation or translation ( $A$ = {Rotation, Translation, ...}) according to an example embodiment. $L$ = {< $q$, $L$ >| $q \in R^3$} is a list of parameters. A first parameter may be a point $P$, and a second parameter may be a nonzero normal vector $\vec{n}$ that is computed with respect to the point $P$. With $P$ and $\vec{n}$, a plane is defined in the 3D polygon mesh 120 as a set of all points $r$ such that

$$\vec{n} \ (r - P) = 0$$

The behavior of a widget can be defined in the plane. Other parameters can be designated by a user intersecting with the plane.

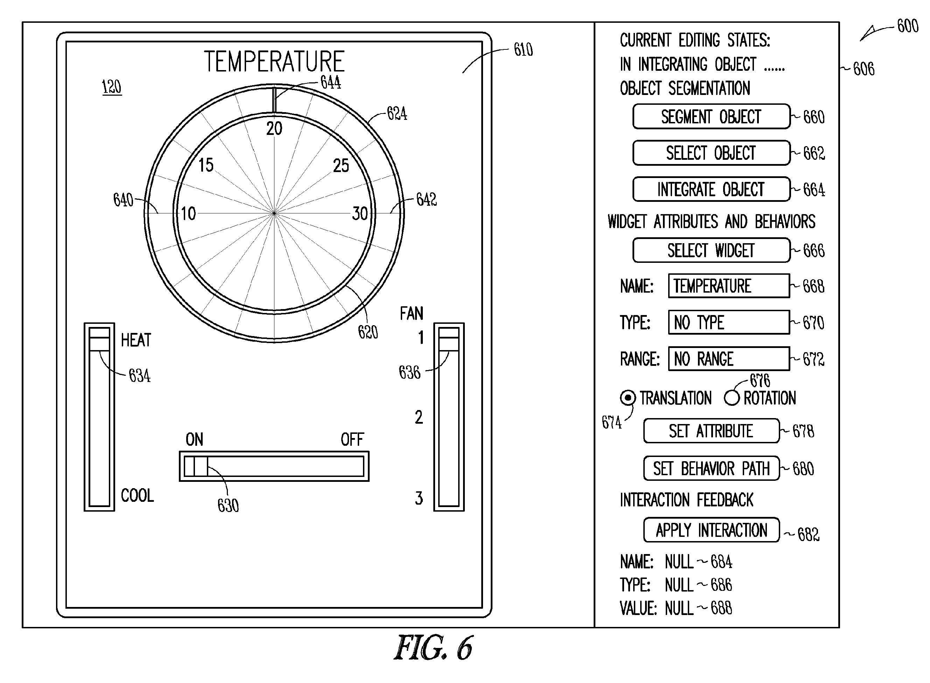

Figure 6 is a diagram of a 3D UI image 600 according to an example embodiment. The 3D UI image 600 is what a user would see from a display device (not shown) when interacting with a 3D UI according to an example embodiment. The 3D UI image 600 includes the 3D polygon mesh 120 representing a HVAC controller and controls 606 that will be described herein. The 3D polygon mesh 120 may be segmented into six widgets including a base 610, a top cylinder 620, a bottom cylinder 624, a power control bar 630, a direction control switch 634 to switch between heating and cooling, and a fan control 636 to select a fan speed. The top cylinder 620 may include the numbers 310 representing temperature and the top cylinder 320 shown in Figures 3A and 3B according to an example embodiment. The behavior definition module 140 defines the behavior for the top cylinder 620 to be rotation with respect to the base 610, and the behavior for the power control bar 630 to be translation with respect to the base 610.

Behaviors defined for widgets may have constraints. Rotation in some embodiments may be constrained by a minimum angle point that cannot overrun an indicator point in a clockwise direction. Rotation may also be constrained by a maximum angle point that cannot overrun the indicator point in the counter-clockwise direction. In some embodiments, rotation has parameters including a center point, a normal vector computed from the center point, an indicator point, a minimum angle point, and a maximum angle point.

Translation is permitted along a line segment between a start point and an end point. Translation may also have parameters including a start point, a normal vector, and an end point. Examples of numerical values for the parameters of translation and rotation are shown in Table 2.

Table 2

| Type: Rotation | Type: Translation |
|---|---|
| Parameters: | |
| P: <45.3100, -13.5668, 65.2138> | Parameters: |
| N: <0.0000, -1.0000, 0.0000> | P: <35.8292, -7.91529, 33.0807> |
| Indicator: <45.2720, -13.5668, 73.2607> | N: <0.0000, -1.0000, 0.0000> |
| Angle1: <36.7368, -13.5668, 64.4327> | P2: <56.3646, -7.91529, 33.1389> |
| Angle2: <52.7542, -13.5668, 64.2552> | |

A dependency constraint may be attached to the widgets, which defines how the widgets interact with each other. In the HVAC controller according to an example embodiment, all other widgets such as the top cylinder 620 to control temperature, the direction control switch 634 to switch between heating and cooling, and the fan control 636 to select a fan speed, will be inactive when the power control bar 630 is set as OFF.

The 3D UI generated for the 3D polygon mesh 120 according to the methods 200, 400, and 500 allows a user to rotate the top cylinder 620 to set a temperature for a physical environment and to move the power control bar 630 to turn on or turn off power supplied to an appliance represented by the 3D polygon mesh 120.

In block 550, the method 500 ends.

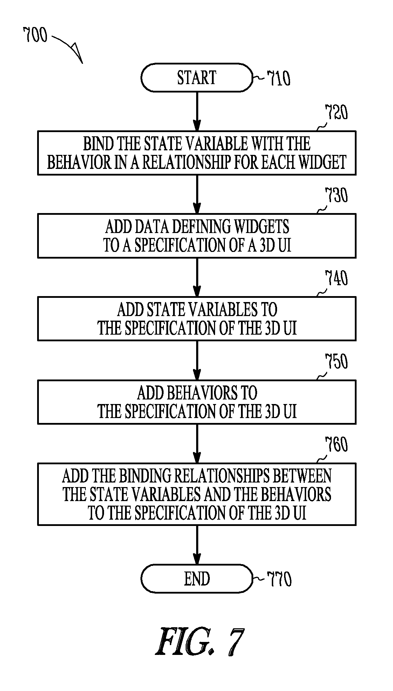

Figure 7 is a flow diagram of a method 700 according to an example embodiment. The method 700 shows the activity of the 3D UI specification module 150, and the method 700 will be described with reference to the 3D UI image 600 shown in Figure 6. In block 710, the method 700 starts. In block 720, the 3D UI specification module 150 binds the state variable with the behavior in a relationship for each widget.

The activity of block 720 may be illustrated with respect to the top cylinder 620 shown in Figure 6. The top cylinder 620 has a defined behavior of rotation according to the method 400. The rotation is defined by several parameters including a center point, normal vector computed with respect to the center point, an indicator point, a minimum angle point, and a maximum angle point. The top cylinder 620 has a state variable e according to the method 500. The state variable e is an integer with a legal range of [10, 30]. The 3D UI specification module 150 defines the relationship by binding the minimum temperature 10 with a minimum angle point 640 and the maximum temperature 30 with a maximum angle point 642. With the definition of the state variable e, the behavior, and the binding relationship, the temperature at any rotation can be computed with linear interpolation. An indicator point 644 identifies a current temperature.

In blocks 730-760, the 3D UI specification module 150 assembles a specification of the 3D UI. The 3D UI specification can be stored as a file and loaded into a computing system to allow a user to visualize and interact with the 3D UI. In block 730, the 3D UI specification module 150 adds data defining the widgets generated by the mesh segmentation module 110 to the specification. In block 740, the 3D UI specification module 150 adds the state variables defined by the state variable designation module 130 to the specification. In block 750, the 3D UI specification module 150 adds the behaviors defined by the behavior definition module 140 to the specification. In block 760, the 3D UI specification module 150 adds the binding relationships between the state variables and the behaviors defined by the 3D UI specification module 150 to the specification.

According to an example embodiment, a specification for the 3D UI is defined by a name and one or more widgets. Each widget is defined by a name, a state variable, a behavior, and a 3D shape. Each state variable is defined by a variable type, a valid value range, and a default value. Each behavior is defined by a behavior type and one or more parameters. Each 3D shape is defined by points and faces. According to an example embodiment, a specification for the 3D UI may include the following details:

3DUI = HVAC Controller, Widget1, Widget2, Widget3, Widget4

Widget1 = Temperature

State Variable = (Int, [10, 30], 20)

Behavior= (Rotation, P: <45.3100, -13.5668, 65.2138>, N: <0.0000, -1.0000, 0.0000>, Indicator: <45.2720, -13.5668, 73.2607>, Angle1: <36.7368, - 13.5668, 64.4327>, Angle2: <52.7542, -13.5668, 64.2552>)

3D Shape = (Points (0: 36.222, -13.568, 64.223), (1: 38.723, -13.568, 68.802), (2: 47.789, -13.568, 72.567), ...), (Faces (0: 0, 1, 2), (1: 2, 3, 5), (2: 3, 8, 9), ...)

Widget2 = Power

State Variable = (Bool, [ON, OFF], ON)

Behavior = (Translation, P: <35.8292, -7.91529, 33.0807>, N: <0.0000, -1.0000, 0.0000>, P2: <56.3646, -7.91529, 33.1389>

3D Shape = (Points (0: 55.734, -7.913, 32.235), (1: 57.212, -7.915, 32.239), (2: 56.239, -7.914, 34.967), ...), (Faces (0: 0, 2, 4), (1: 2, 3, 5), (2: 2, 8, 7), ...)

The 3D shape for each widget includes many points and faces, and only three points and faces are shown here, and other points and faces are represented with suspension points. The details of Widget3 for a heat controller and Widget4 for a fan controller are also not shown.

In block 770, the method 700 ends.

The acts in the methods 200, 400, 500, and 700 may be implemented by hardware in an ASIC or may take the form of instructions implemented by a computing device such as a microprocessor or a microcontroller.

With reference to Figure 6, the controls 606 in the 3D UI image 600 allow a user to implement the acts in the methods 200, 400, 500, and 700 described above. A segmentation control 660 allows a user to segment the 3D polygon mesh 120 into sub-components. A first select control 662 allows the user to select one or more of the sub-components to be included in a widget. An integration control 664 allows the user to assemble the selected sub-components into a widget. Once all of the widgets are assembled, a second select control 666 allows the user to select one of the widgets. A first name entry 668 allows the user to assign a name for a state variable for the selected widget. A first type entry 670 allows the user to assign a type to the state variable. A range entry 672 allows the user to assign a range for the state variable. A translation entry 674 allows the user to indicate translation as the behavior for the selected widget. A rotation entry 676 allows the user to indicate rotation as the behavior for the selected widget. An attribute control 678 allows the user to indicate an attribute for the selected widget. A behavior path control 680 allows the user to indicate a behavior path for the selected widget. An interaction control 682 allows the user to define a relationship between the state variable and the behavior for the selected widget. A second name entry 684 allows the user to assign a name for a state variable for the selected widget. A second type entry 686 allows the user to assign a type to the state variable. A value entry 688 allows the user to assign a range for the state variable.

The 3D UI described herein according to example embodiments are operated by the user to interact with an appliance in a physical environment such as a HVAC controller. When an operation is applied to a widget in the 3D UI, the state variable of the widget is updated, and an action on the appliance in the physical environment is activated via a communication protocol. When an action is applied to the appliance in the physical environment, a corresponding state variable of the 3D UI is updated via the communication protocol, and an operation on the corresponding widget is presented in the 3D UI.

With reference to Figure 6, a user interacting with the 3D UI image 600 may turn the top cylinder 620 to initiate a movement in a HVAC controller in a physical environment via a communication protocol. Such a movement of the HVAC controller may lead to a change in temperature in the physical environment. Likewise, a temperature adjustment action applied to the HVAC controller in the physical environment is presented through the communication protocol as a rotation of the top cylinder 620 in the 3D UI image 600.

The example embodiments described herein begin with a high fidelity geometric model, such as the 3D polygon mesh 120, designed by graphic designers or scanned from a physical object. The example embodiments generate a 3D UI from the geometric model with a high usability interaction behavior.

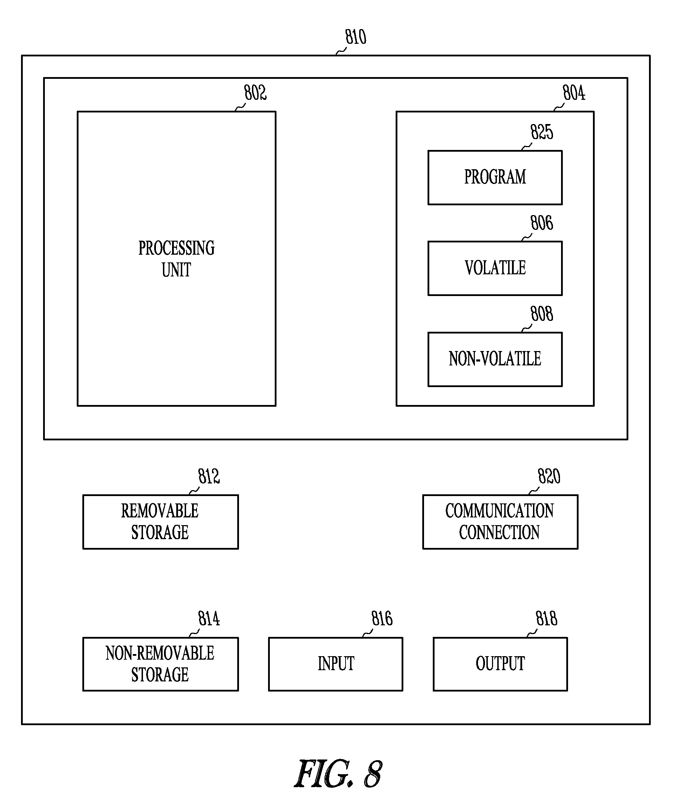

A block diagram of a computer system that executes programming for performing the above methods is shown in FIG. 8. A computing device in the form of a computer 810, may include a processing unit 802, memory 804, removable storage 812, and non-removable storage 814. Memory 804 may include volatile memory 806 and non-volatile memory 808. Computer 810 may include - or have access to a computing environment that includes - a variety of computer-readable media, such as volatile memory 806 and non-volatile memory 808, removable storage 812 and non-removable storage 814. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 810 may include or have access to a computing environment that includes input 816, output 818, and a communication connection 820. The computer may operate in a networked environment using a communication connection to connect to one or more remote computers. The remote computer may include a personal computer (PC), server, router, network PC, a peer device or other common network node, or the like. The communication connection may include a Local Area Network (LAN), a Wide Area Network (WAN) or other networks.

Computer-readable instructions stored on a computer-readable medium are executable by the processing unit 802 of the computer 810. A hard drive, CD-ROM, and RAM are some examples of articles including a computer-readable medium.

While there has been described herein the principles of the application, it is to be understood by those skilled in the art that this description is made only by way of example and not as a limitation to the scope of the application. Accordingly, it is intended by the appended claims, to cover all modifications of the application which fall within the true spirit and scope of the application.

**Claims**

1. A system comprising:

   a mesh segmentation module (110) to segment a three-dimensional (3D) polygon mesh (120) into a plurality of widgets;
   a state variable designation module (130) to define a state variable for each widget;
   a behavior definition module (140) to define a behavior for each widget; and
   a 3D user interface (UI) module (150) to assemble a 3D UI from the widgets, the state variables, and the behaviors.

2. The system of claim 1, wherein the 3D UI module (150) is applicable to bind the state variable with the behavior in a relationship for each widget.

3. The system of claim 2, wherein the 3D UI module (150) is applicable to assemble the widgets, the state variables, the behaviors, and the relationships into a 3D UI.

4. The system of claim 1, wherein the 3D UI is applicable to generate a 3D UI image (600) to be interacted with by a user (126).

5. The system of claim 1, wherein:

   the mesh segmentation module (110) is applicable to:

      segment the 3D polygon mesh (120) into a plurality of sub-components; and
      assemble the sub-components into the widgets;

   the state variable designation module (130) is applicable to define each state variable with a type and a legal value range; and

the behavior definition module (140) is applicable to define each behavior with a type and one or more parameters.

6. A method comprising:

segmenting a 3D polygon mesh (120) into a plurality of widgets;
defining a state variable for each widget;
defining a behavior for each widget; and
assembling a 3D UI from the widgets, the state variables, and the behaviors.

7. The method of claim 6, wherein assembling a 3D UI includes binding the state variable with the behavior in a relationship for each widget.

8. The method of claim 7, wherein assembling a 3D UI includes assembling the widgets, the state variables, the behaviors, and the relationships into a 3D UI.

9. The method of claim 6, further comprising generating a 3D UI image (600) from the 3D UI to be interacted with by a user (126).

10. The method of claim 6, wherein:

segmenting a 3D polygon mesh (120) further comprises:

segmenting the 3D polygon mesh (120) into a plurality of sub-components; and
assembling the sub-components into the widgets;

defining a state variable further comprises:

assigning a type to the state variable; and
assigning a legal value range to the state variable; and

defining a behavior further comprises:

assigning a type to the behavior; and
assigning one or more parameters to the behavior.

*FIG. 1*

START ~ 210

RECEIVE DATA REPRESENTING A 3D POLYGON MESH — 220

SEGMENT THE 3D POLYGON MESH INTO A SET OF SUB-COMPONENTS — 230

ASSEMBLE THE SUB-COMPONENTS INTO ONE OR MORE WIDGETS — 240

END ~ 250

*FIG. 2*

FIG. 3A

FIG. 3B

FIG. 3C

FIG. 3D

400

START — 410

DEFINE A STATE VARIABLE FOR EACH WIDGET — 420

END — 450

## FIG. 4

500

START — 510

DEFINE A BEHAVIOR FOR EACH WIDGET — 520

END — 550

## FIG. 5

FIG. 6

EP 2 163 985 A1

700

START ~710

BIND THE STATE VARIABLE WITH THE
BEHAVIOR IN A RELATIONSHIP FOR EACH WIDGET ~720

ADD DATA DEFINING WIDGETS
TO A SPECIFICATION OF A 3D UI ~730

ADD STATE VARIABLES TO
THE SPECIFICATION OF THE 3D UI ~740

ADD BEHAVIORS TO
THE SPECIFICATION OF THE 3D UI ~750

ADD THE BINDING RELATIONSHIPS BETWEEN
THE STATE VARIABLES AND THE BEHAVIORS
TO THE SPECIFICATION OF THE 3D UI ~760

END ~770

*FIG. 7*

810

802

PROCESSING
UNIT

804

825

PROGRAM

806

VOLATILE

808

NON-VOLATILE

812

REMOVABLE
STORAGE

820

COMMUNICATION
CONNECTION

814

NON-REMOVABLE
STORAGE

816

INPUT

818

OUTPUT

*FIG. 8*

Europäisches
Patentamt

European
Patent Office

Office européen
des brevets

**EUROPEAN SEARCH REPORT**

Application Number

EP 09 16 9159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/013694 A1 (GOLD JULIAN [GB] ET AL) 18 January 2007 (2007-01-18)<br>* figure 5 *<br>* page 1, paragraph 8 *<br>* page 2, paragraph 23-25 * | 1-10 | INV.<br>G06F9/44 |
| Y | US 2007/165031 A1 (GILBERT STEPHEN [US] ET AL) 19 July 2007 (2007-07-19)<br>* page 3, paragraph 15 - page 4 *<br>* page 4, paragraph 41 - page 5 *<br>* page 7, paragraph 53 - page 8, paragraph 57 *<br>* page 9, paragraph 65 - page 14, paragraph 93 *<br>* page 15, paragraph 98 - page 17, paragraph 116 *<br>* page 19, paragraph 123 - page 20, paragraph 126 *<br>* figures 5,7-10,15-20e * | 1-10 | |
| Y | US 6 704 018 B1 (MORI KENICHI [JP] ET AL) 9 March 2004 (2004-03-09)<br>* column 3, line 38 - column 5, line 8 *<br>* column 8, line 18 - column 10, line 35 * | 1-10 | TECHNICAL FIELDS SEARCHED (IPC)<br><br>G06F<br>G06T |
| A | WO 01/37071 A (YCD MULTIMEDIA LTD [IL]; ZEEVI DANI [IL]; LEVAVI NOAM [IL]) 25 May 2001 (2001-05-25)<br>* the whole document * | 1-10 | |
| A | WO 2004/109501 A (SWISS REINSURANCE CO [CH]; PORTMANN JUERG [CH]) 16 December 2004 (2004-12-16)<br>* the whole document * | 1,6 | |
| A | US 6 078 331 A (PULLI KARI ANTERO [US] ET AL) 20 June 2000 (2000-06-20)<br>* the whole document * | 1,6 | |

-/--

The present search report has been drawn up for all claims

| Place of search | Date of completion of the search | Examiner |
|---|---|---|
| Munich | 28 October 2009 | Del Chiaro, Silvia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 09 16 9159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/083328 A1 (UEDA AKIRA [JP] ET AL) 21 April 2005 (2005-04-21) * the whole document * ----- | 1,6 | |

TECHNICAL FIELDS
SEARCHED      (IPC)

The present search report has been drawn up for all claims

| Place of search | Date of completion of the search | Examiner |
|---|---|---|
| Munich | 28 October 2009 | Del Chiaro, Silvia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 16 9159

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2009

| Patent document cited in search report | | Publication date | Patent family member(s) | | Publication date |
|---|---|---|---|---|---|
| US 2007013694 | A1 | 18-01-2007 | NONE | | |
| US 2007165031 | A1 | 19-07-2007 | NONE | | |
| US 6704018 | B1 | 09-03-2004 | JP 2001118082 A | | 27-04-2001 |
| WO 0137071 | A | 25-05-2001 | AU | 1297801 A | 30-05-2001 |
| | | | IL | 132929 A | 27-09-2004 |
| | | | US | 7320109 B1 | 15-01-2008 |
| | | | US | 2008077872 A1 | 27-03-2008 |
| WO 2004109501 | A | 16-12-2004 | AU | 2004246353 A1 | 16-12-2004 |
| | | | CN | 1799026 A | 05-07-2006 |
| | | | JP | 2006526828 T | 24-11-2006 |
| | | | US | 2006168536 A1 | 27-07-2006 |
| US 6078331 | A | 20-06-2000 | NONE | | |
| US 2005083328 | A1 | 21-04-2005 | JP 2005122387 A | | 12-05-2005 |

EPO FORM P0459

For more details about this annex : see Official Journal of the European Patent Office, No. 12/82